# FASCICULE DE BREVET EUROPEEN

(11) **EP 0 728 616 B1**
(45) Date de publication et mention de la délivrance du brevet: **19.05.1999**
(21) Numéro de dépôt: 96400392.5
(22) Date de dépôt: 26.02.1996
(51) Int. Cl.: B60Q 1/30

(54) **Feu de signalisation du type pour lunette arrière de véhicule automobile**
Hochgesetzte Leuchte für Fahrzeuge
Center high mounted light for vehicle

(30) Priorité: 27.02.1995 FR 9502240
(43) Date de publication de la demande: 28.08.1996
(73) Titulaire: VALEO VISION, 93000 Bobigny (FR)
(72) Inventeur: Sentenac, Jean-Pierre, 81100 Castres (FR)
(74) Mandataire: Martin, Jean-Jacques

(56) Documents cités:
- DE-A- 3 017 405
- FR-A- 2 563 787
- US-A- 5 243 502

## Description

La présente invention est relative à un feu de signalisation du type pour lunette arrière de véhicule automobile ou analogue.

Il est désormais classique d'équiper un véhicule, soit en usine, soit ultérieurement, d'un feu de signalisation arrière surélevé, tel qu'un feu stop, que l'on place à l'intérieur de l'habitacle du véhicule, au voisinage de la lunette arrière.

Un tel feu permet par exemple de signaler un freinage au véhicule qui suit. Il est soit fixé sur la plage arrière du véhicule, soit fixé, par exemple collé, directement sur la lunette arrière.

Classiquement, un tel feu comporte un support qui reçoit des moyens optiques, et une visière qui prolonge ce support jusqu'à la lunette arrière.

A ce jour, la visière est généralement un élément rigide qui est en contact avec la lunette arrière par l'intermédiaire de butées en caoutchouc ou de joints qui entourent au moins partiellement la visière et qui sont destinés à éviter les bruits ou fuites de lumière.

Cette structure - qui est par exemple illustrée dans US 5 243 502 (utilisé pour limiter la revendication 1) et dans DE-A-30 17 405 - présente l'inconvénient d'être difficilement adaptable à différents types de courbures ou d'inclinaisons de lunettes arrière.

Un but principal de l'invention est de pallier cet inconvénient.

Un autre but de l'invention est de proposer un feu de signalisation dont la fabrication et le montage sur un véhicule sont simplifiés.

L'invention propose à cet effet un feu de signalisation du type pour lunette arrière de véhicule automobile ou analogue, comportant des moyens optiques, un support recevant ces moyens, une visière en un matériau plastique, qui s'étend à partir du support, et une semelle de montage qui présente d'une pièce une partie rigide qui forme le support et une partie souple d'épaisseur réduite qui constitue une lèvre destinée à assurer une étanchéité optique par contact avec la lunette arrière.

Ainsi, la visière est apte à s'adapter à différents types d'inclinaisons ou de courbures de lunettes arrière et à compenser les dispersions dimensionnelles.

En outre, étant donné que l'étanchéité optique entre la visière et la lunette arrière est assurée par le bord souple de la visière, aucun joint ou butée de caoutchouc complémentaire n'est nécessaire. Les coûts de montage et de fabrication s'en trouvent diminués.

Selon d'autres caractéristiques avantageuses de l'invention, prises seules ou selon toutes leurs combinaisons techniquement possibles :
- la zone formant support est entourée par une ou plusieurs zones d'épaisseur inférieure formant lèvre d'étanchéité optique et s'étendant sur au moins une majeure partie de la périphérie de la semelle de montage ;
- la semelle de montage présente une paroi principale inférieure généralement horizontale, bordée par un rebord arrière, ainsi que par deux flancs latéraux de forme générale triangulaire qui s'étendent du rebord arrière jusqu'à l'avant de la paroi principale, le bord avant de la paroi principale étant d'épaisseur réduite ;
- les flancs latéraux et le rebord arrière sont également d'épaisseur réduite ;
- la semelle de montage est en CPEE (polyether-polyester block copolymer selon la désignation anglo-saxonne) ;
- le ou les bords formant lèvres souples sont d'une épaisseur de l'ordre de 2,5 mm, la zone formant support étant d'une épaisseur de l'ordre de 4 mm ou supérieure.

D'autres caractéristiques et avantages de l'invention ressortiront encore de la description qui suit. Cette description est purement illustrative et non limitative. Elle doit être lue en regard des dessins annexés sur lesquels :
- la figure 1 est une vue en coupe d'un feu de signalisation conforme à un mode de réalisation de l'invention ;
- la figure 2 est une représentation en perspective de la pièce formant support et visière du feu de la figure 1 ;
- la figure 3 est une vue en coupe selon la ligne III-III de la figure 2.

Dans tout le présent texte, les termes "avant", "arrière", "supérieur", "inférieur" ou analogues se rapportent à une vue que pourrait avoir du feu de signalisation un observateur qui serait situé derrière le véhicule sur lequel ledit feu est monté et qui regarderait la lunette arrière dudit véhicule.

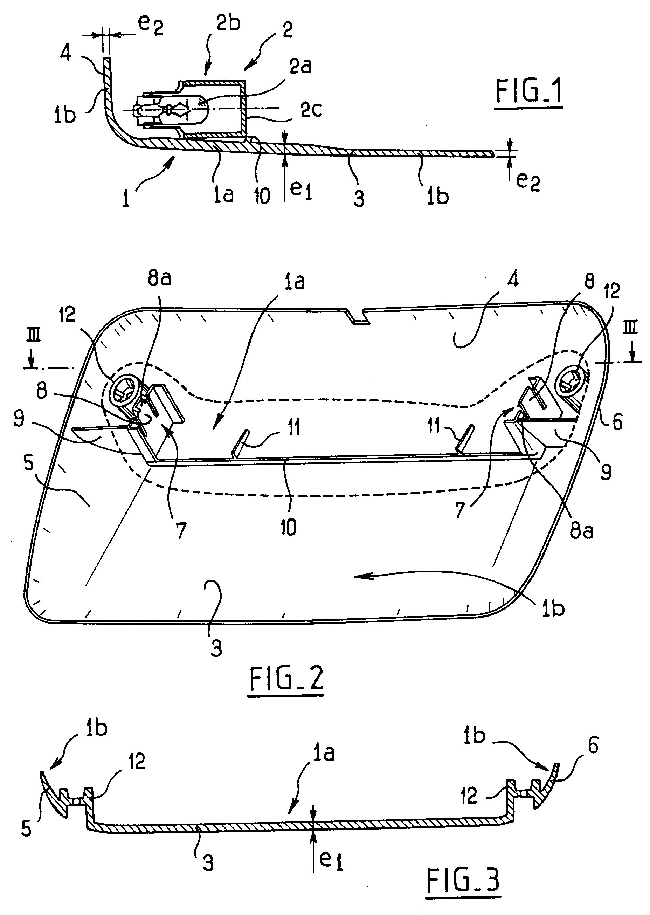

Le feu de signalisation qui a été représenté sur la figure 1 comporte principalement une semelle de montage 1 et des moyens optiques, référencés par 2 dans leur ensemble, montés sur ladite semelle 1.

Les moyens optiques 2 sont de type classique. Ils comportent en particulier une lampe 2a et un boîtier optique 2b dans lequel la lampe 2a est montée. Ce boîtier 2b présente une glace avant 2c.

La semelle de montage 1 (figures 1 à 3) est moulée d'une pièce en un matériau thermoplastique, qui permet en jouant sur son épaisseur d'obtenir des zones flexibles ou rigides.

Ce matériau est avantageusement un CPEE, par exemple celui commercialisé par la Société General Electric sous la dénomination LOMOD (marque déposée).

La semelle 1 présente une partie rigide 1a qui forme support et dans laquelle les moyens optiques 2 sont reçus, ainsi qu'une partie souple 1b qui entoure la partie rigide 1a. Sur la figure 2, ces deux parties sont délimitées par des traits tiretés. La partie souple 1b vient en contact avec la lunette arrière (non représentée) du véhicule. Elle se déforme pour s'adapter à son inclinaison et à sa géométrie et ainsi assurer l'étanchéité optique entre la semelle 1 et la lunette arrière.

Notamment, cette partie souple 1b prolonge la partie rigide 1a pour former à l'avant de la semelle 1 la visière du feu

La section droite de la semelle 1, dans un plan de coupe vertical parallèle à la direction d'émission du feu, a une forme en L définie par une paroi principale inférieure 3, généralement horizontale, et un rebord arrière 4, généralement vertical.

La paroi inférieure 3 et le rebord arrière 4 sont bordés latéralement par deux flancs 5 et 6 de forme générale triangulaire.

Au niveau de la partie rigide 1a, la paroi inférieure 3 porte deux pattes de maintien 7 entre lesquelles les moyens optiques 2 sont reçus. Ces deux pattes 7 sont disposées d'un côté et de l'autre de la largeur de la paroi inférieure 3. Elles sont de forme en U et leurs ouvertures se font face.

Ces deux pattes 7 présentent chacune une branche élastique 8 terminée par une protubérance d'accrochage 8a en saillie intérieure. Ces branches 8 assurent le verrouillage élastique du boîtier d'optique 2b.

Les pattes 7 sont renforcées par des entretoises 9 qui prennent appui sur les flancs 5 et 6 et qui sont destinées à cacher les fixations 8 et 12.

En outre, une nervure 10 de faible hauteur s'étend d'une patte 7 à l'autre, à l'avant de celles-ci, et définit ainsi une butée de positionnement et de maintien pour les moyens optiques 2. Cette nervure 10 sert à masquer le jeu en partie basse, entre le boîtier optique rectiligne 2b et la surface légèrement incurvée de la partie rigide 1a.

Deux nervures d'appui 11, également de faible hauteur, s'étendent entre les pattes 7, perpendiculairement à la nervure 10.

Deux manchons 12 pour la réception de moyens de fixation du feu sur la lunette arrière (non représentés) sont également prévus aux deux extrémités latérales de la zone rigide 1a.

Comme on l'aura compris, dans sa portion avant qui correspond à la partie souple 1b, la paroi 3 présente une épaisseur qui est inférieure à l'épaisseur de la partie rigide 1a. La paroi arrière 4 et les flancs 5 et 6 sont également amincis et constituent des portions de la partie souple 1b.

A titre d'exemple, dans le cas où le matériau thermoplastique dans lequel la semelle 1 est moulée est le LOMOD (marque déposée General Electric), l'épaisseur e1 de la partie rigide 1a est de 4 mm, tandis que l'épaisseur e2 de la partie souple 1b est de 2,5 mm ce qui correspond à une épaisseur classiquement utilisée pour les visières de l'art antérieur en polycarbonate. Ainsi, la semelle 1 présente une apparence esthétique qui ne diffère pas substantiellement de celle des semelles de l'art antérieur.

La rigidité de la partie 1a est alors comparable à celle que présentent les boîtiers d'optique des feux de l'art antérieur, tandis que la partie 1b est d'une souplesse qui permet à la semelle de s'adapter à différents types de lunettes arrière.

## Revendications

1. Feu de signalisation du type pour lunette arrière de véhicule automobile ou analogue, comportant des moyens optiques (2), une semelle de montage (1) qui présente une partie rigide (1a) qui forme un support recevant les moyens optiques (2) et une partie souple (1b) d'épaisseur (e2) réduite qui constitue une lèvre destinée à assurer une étanchéité optique par contact avec la lunette arrière, caractérisé en ce que la partie rigide (1a) et la partie souple (1b) forment une seule pièce en un matériau plastique.

2. Feu de signalisation selon la revendication 1, caractérisé en ce que la zone (1a) formant support est entourée par une ou plusieurs zones d'épaisseur (e2) inférieure formant lèvre d'étanchéité optique et s'étendant sur au moins une majeure partie de la périphérie de la semelle de montage (1).

3. Feu de signalisation selon l'une des revendications 1 et 2, caractérisé en ce que la semelle de montage (1) présente une paroi principale inférieure (3) généralement horizontale, bordée par un rebord arrière (4), ainsi que par deux flancs latéraux (5, 6) de forme générale triangulaire qui s'étendent du rebord arrière (4) jusqu'à l'avant de la paroi principale (3), le bord avant de la paroi principale (3) étant d'épaisseur (e2) réduite.

4. Feu de signalisation selon la revendication 3, caractérisé en ce que les flancs latéraux (5, 6) et le rebord arrière sont également d'épaisseur (e2) réduite.

5. Feu de signalisation selon l'une des revendications précédentes, caractérisé en ce que la semelle de montage est en CPEE (polyether-polyester block copolymer selon la désignation anglo-saxonne).

6. Feu de signalisation selon la revendication 5, caractérisé en ce que le ou les bords formant lèvres souples sont d'une épaisseur (e2) de l'ordre de 2,5 mm, la zone (1a) formant support étant d'une épaisseur (e1) de l'ordre de 4 mm ou supérieure.

7. Semelle de montage pour un feu de signalisation, selon l'une des revendications précédentes.

## Claims

1. Indicator light of the type for the rear window of a motor car or the like, having optical means (2), a mounting base plate (1) which has a rigid part (1a) which forms a support receiving the optical means (2) and a flexible part (1b) of reduced thickness (e2) which constitutes a lip intended to provide an optical seal by contact with the rear window, characterised in that the rigid part (1a) and the flexible part (1b) form a single piece made from plastics material.

2. Indicator light according to Claim 1, characterised in that the area (1a) forming a support is surrounded by one or more areas of lesser thickness (e2) forming an optical sealing lip and extending over at least a major part of the periphery of the mounting base plate (1).

3. Indicator light according to one of Claims 1 and 2, characterised in that the mounting sole plate (1) has a generally horizontal bottom main wall (3) bordered by a rear flange (4), and by two lateral flanks (5, 6) of triangular shape overall which extend from the rear flange (4) as far as the front of the main wall (3), the front edge of the main wall (3) being of reduced thickness (e2).

4. Indicator light according to Claim 3, characterised in that lateral flanks (5, 6) and the rear flange are also of reduced thickness (e2).

5. Indicator light according to one of the preceding claims, characterised in that the mounting base plate is made from PPBC (polyether-polyester block copolymer according to the English designation).

6. Indicator light according to Claim 5, characterised in that the edge or edges forming flexible lips have a thickness (e2) of around 2.5 mm, the area (1a) forming a support having a thickness (e1) of around 4 mm or more.

7. Mounting base plate for an indicator light, according to one of the preceding claims.

## Patentansprüche

1. Signalleuchte für die Heckscheibe eines Kraftfahrzeugs oder ähnliches, umfassend optische Mittel (2), einen Montagesockel (1), der einen starren Teil (1a), der den Träger für die Aufnahme der optischen Mittel (2) bildet, und einen biegsamen Teil (1b) mit geringerer Dicke (e2) aufweist, der eine Lippe bildet, die dazu bestimmt ist, eine optischen Dichtung durch Kontakt mit der Heckscheibe zu bilden, **dadurch gekennzeichnet**, daß der starre Teil (1a) und der biegsame Teil (1b) ein einziges Teil aus Kunststoff bilden.

2. Signalleuchte nach Anspruch 1, **dadurch gekennzeichnet**, daß der als Träger ausgebildete Bereich (1a) von einem oder mehreren Bereichen mit geringerer Dicke (e2) umgeben ist, die eine optische Dichtungslippe bilden und sich wenigstens auf einem größeren Teil des Umfangs des Montagesockels (1) erstrecken.

3. Signalleuchte nach einem der Ansprüche 1 und 2, **dadurch gekennzeichnet**, daß der Montagesockel (1) eine allgemein horizontale untere Hauptwand (3) aufweist, die durch eine hintere Randleiste (4) sowie durch zwei Seitenflanken (5, 6) mit allgemein dreieckiger Form eingefaßt ist, die sich von der hinteren Randleiste (4) bis zur Vorderseite der Hauptwand (3) erstrecken, wobei die Vorderkante der Hauptwand (3) eine geringere Dicke (e2) aufweist.

4. Signalleuchte nach Anspruch 3, **dadurch gekennzeichnet**, daß die Seitenflanken (5, 6) und die hintere Randleiste ebenfalls eine geringere Dicke (e2) aufweisen.

5. Signalleuchte nach einem der vorangehenden Ansprüche, **dadurch gekennzeichnet**, daß der Montagesockel aus CPEE (Polyetherpolyester-Blockcopolymer nach der angelsächsischen Bezeichnung) besteht.

6. Signalleuchte nach Anspruch 5, **dadurch gekennzeichnet**, daß die Kante bzw. die Kanten, die als biegsame Lippen ausgebildet sind, eine Dicke (e2) in der Größenordnung von 2,5 mm aufweisen, wobei der als Träger ausgebildete Bereich (1a) eine Dicke (e1) in einer Größenordnung von 4 mm oder mehr aufweist.

7. Montagesockel für eine Signalleuchte nach einem der vorangehenden Ansprüche.
